# EUROPÄISCHE PATENTSCHRIFT

(11) **EP 1 675 681 B1**
(45) Veröffentlichungstag und Bekanntmachung des Hinweises auf die Patenterteilung: **24.02.2010**
(21) Anmeldenummer: 04790686.2
(22) Anmeldetag: 20.10.2004
(51) Int. Cl.: B01L 3/02, B01J 19/00, B01L 3/00

(54) **VERFAHREN UND VORRICHTUNGEN ZUR PROBENABLAGE AUF EINEM ELEKTRISCH ABGESCHIRMTEN SUBSTRAT**
METHOD AND DEVICES FOR DEPOSITING SAMPLES ON AN ELECTRICALLY SHIELDED SUBSTRATE
PROCEDES ET DISPOSITIFS POUR LE DEPOT D'ECHANTILLONS SUR UN SUBSTRAT ELECTRIQUEMENT BLINDE

(30) Priorität: 23.10.2003 DE 10349493
(43) Veröffentlichungstag der Anmeldung: 05.07.2006
(73) Patentinhaber: Scienion AG, 12489 Berlin (DE)
(72) Erfinder: NORDHOFF, Eckhard, 14195 Berlin (DE); BULLOCK, Alan, 44536 Lünen (DE); LÜBBERT, Christine, 10799 Berlin (DE); SCHENK, Antonin, Brno 52100 (CZ); EICKHOFF, Holger, 28857 Syke (DE); HORN, Martin, 12267 Berlin (DE)
(74) Vertreter: Hertz, Oliver
(86) Internationale Anmeldenummer: PCT/EP2004/011878
(87) Internationale Veröffentlichungsnummer: WO 2005/039771

(56) Entgegenhaltungen:
- EP-A- 1 099 484
- WO-A-02/094442
- WO-A-03/028868
- US-A- 3 927 471
- US-A- 5 468 911
- US-A1- 2002 003 177

## Beschreibung

Die Erfindung betrifft Verfahren zur Probenablage mit den Merkmalen des Oberbegriffs von Anspruch 1, insbesondere Verfahren zur Bildung von Probenarrays in Kompartimenten von Mikro- oder Nanotiterplatten, und Vorrichtungen zur Umsetzung derartiger Verfahren.

Es ist allgemein bekannt, in der Biochemie und Gentechnik chemische Reaktionen mit geringsten Probenvolumen unter Verwendung einer Arraytechnik durchzuführen, bei der die Reaktanden als Probenanordnungen (Arrays) auf Substraten deponiert, zur Reaktion gebracht und beobachtet werden. Typischerweise werden als Substrate Glasoberflächen verwendet, auf die kleinste Probenmengen (z. B. p1-Volumen) beispielsweise mit so genannten Picking-Spotting-Werkzeugen aufgebracht werden. Picking-Spotting-Werkzeuge besitzen den Vorteil, dass die Proben mit einer hohen Ortsgenauigkeit positioniert werden können. Nachteilig ist jedoch, dass ihr Betrieb zeitaufwendig ist und besondere Anforderungen an das Substrat und seine räumliche Zugänglichkeit stellen. Alternativ können die Proben berührungslos mit piezoelektrischen Dispensern auf das Substrat aufgebracht werden, die Vorteile in Bezug auf die Geschwindigkeit und Anwendbarkeit bei verschiedenen Substratformen besitzen.

Die berührungslose Probenablage, bei der also kein Kontakt zwischen dem Probendispenser und der Substratoberfläche gegeben ist, kann allerdings eine verminderte Genauigkeit der Probenpositionierung besitzen. Die Probentropfen- oder Partikel bewegen sich entlang einer Flugbahn vom Probendispenser zum Substrat, wobei der Verlauf der Flugbahn nur bei einer sorgfältigen Dispenserkalibrierung bekannt ist und leicht durch äußere Einflüsse gestört sein kann. Dies stellt insbesondere bei der Erzeugung von Arrays mit hohen Probendichten ein Problem dar.

Besondere Probleme können auftreten, wenn die berührungslose Probenpositionierung auf Substraten erfolgt, die zumindest teilweise aus Kunststoffen bestehen. Erfahrungen in der Praxis haben gezeigt, dass es bisher nicht möglich war, mit piezoelektrischen Dispensern auf Kunststoffsubstraten dichte Arrays mit hoher Genauigkeit und Reproduzierbarkeit herzustellen.

Ein besonderes Interesse besteht an der Bildung von Arrays auf den Böden der Kompartimente von Reaktionsplatten, wie zum Beispiel Mikrotiterplatten oder Nanotiterplatten. Diese Reaktionsplatten besitzen in der Regel aus Kunststoff hergestellte Näpfe. Wenn mit piezoelektrischen Dispensern Proben in die Näpfe geschossen werden, landen die Proben häufig nicht an den beabsichtigten Positionen am Napfboden, sondern z. B. an den Napfwänden.

US 2002/0003177 A1 offenbart ein Verfahren, bei dem Proben mit einem elektrostatisch arbeitenden Dispenser in die Näpfe der Mikrotiterplatten übertragen werden. Elektrisch aufgeladene Proben werden vom Dispenser hin zu einem Gitter beschleunigt, durch dessen Gitteröffnungen die Proben in die Näpfe der Mikrotiterplatte gelangen. Eine Abschirmung der Flugbahn der Proben in den Näpfen der Mikrotiterplatte ist jedoch nicht vorgesehen. WO 03/028868 A2 offenbart die Erzeugung von Mikroarrays mit hoher Probendichte auf einem Mikroskop-Deckglas, wobei die Flugbahn der Proben durch elektrische Felder beeinflusst wird, die mit Elektrodenstäben erzeugt werden. Die Elektrodenstäbe erzeugen ein Quadrupol-Feld, in dem die Falllinie der Proben eingestellt wird. WO 02/094442 A1 offenbart eine Biosensorchip-Dispensier-Anordnung, bei der elektrisch geladene Probentropfen unter der Wirkung von elektrischen Feldern auf ein elektrisch leitfähiges Substrat gelenkt werden. Eine Probenablage in Mikrotiterplatten wird in WO 03/028868 A2 oder WO 02/094442 A1 nicht beschrieben. In EP 1 099 484 A1 wird die Ablage von Probentropfen in Mikrotiterplatten beschrieben, wobei die Flugbahn der Probentropfen durch elektrische Felder beeinflusst wird, die zwischen einem Dispenser und einer unter der Mikrotiterplatte angeordneten Gegenelektrodeneinrichtung erzeugt werden.

Die Aufgabe der Erfindung ist es, ein verbessertes Verfahren zur Probenablage mit berührungslos arbeitenden Dispensern bereitzustellen, mit dem die Nachteile herkömmlicher Dispensiertechniken vermieden werden und das sich insbesondere durch eine hohe Genauigkeit und Reproduzierbarkeit bei der Probenablage auszeichnet. Die bisher an kunststoffbasierten Substraten beobachteten Ungenauigkeiten sollen vermieden und erhöhte Probenarray-Dichten ermöglicht werden. Das verbesserte Verfahren soll insbesondere die Probenablage in den Kompartimenten von Mikrotiterplatten oder Nanotiterplatten ermöglichen. Weitere Aufgaben der Erfindung bestehen in der Bereitstellung verbesserter Vorrichtungen zur Umsetzung des erfindungsgemäßen Verfahrens zur Probenablage. Die Vorrichtungen sollen insbesondere eine genaue und reproduzierbare, hochdichte Probenablage ermöglichen und mit bekannten Arraytechniken kompatibel sein.

Diese Aufgaben werden durch Verfahren und Vorrichtungen mit den Merkmalen gemäß den Patentansprüchen 1, 7 oder 11 gelöst. Vorteilhafte Ausführungsformen und Anwendungen der Erfindung ergeben sich aus den abhängigen Ansprüchen.

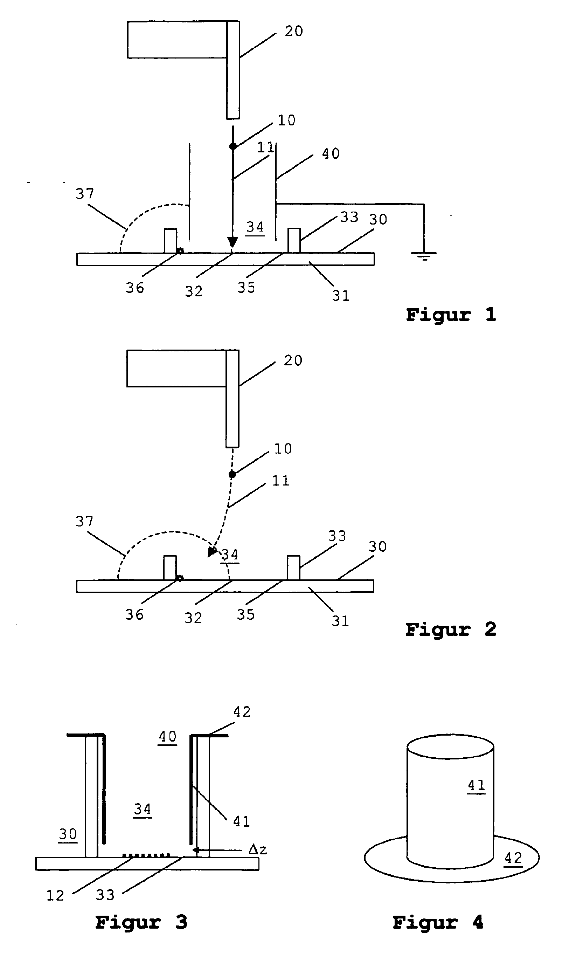

Verfahrensbezogen beruht die Erfindung insbesondere auf der technischen Lehre, bei der Probenablage von tropfen- oder partikelförmigen Proben auf einer Substratoberfläche (Böden von Näpfen einer Mikro- oder Nanotiterplatte) wenigstens einen Teil des Weges (Dispensierweg, Flugbahn), der von der Probe vom berührungslos arbeitenden Probendispenser zur Substratoberfläche zurückgelegt wird, gegen elektrische Felder abzuschirmen. Die Erfinder haben festgestellt, dass die bei der herkömmlichen Probenablagetechnik beobachtete Ungenauigkeit durch elektrische Störfelder verursacht wird, die von durch einzelnen, bspw. durch Reibungselektrizität auf der Substratoberfläche gebildeten Ladungen ausgehen. Durch eine elektrostatische Abschirmung wenigstens des in der Nähe der Substratoberfläche verlaufenden Teils des Dispensierweges werden die störenden elektrischen Felder kompensiert. Damit wird die Ablageposition nur noch durch die Eigenschaften und Betriebsparameter des Probendispensers und nicht mehr wie bei den herkömmlichen Dispensiertechniken durch zufällig verteilte Störfelder beeinflusst. Des Weiteren stellt die Abschirmung vorteilhafterweise eine passive Korrektur dar, die im Unterschied zum Betrieb von herkömmlichen elektrostatischen Dispensern keine aktive Steuerung der Tropfenabgabe erfordert. Weitere Einzelheiten der vorteilhaften Wirkung der erfindungsgemäßen Abschirmung werden unten unter Bezug auf die Figuren 1 und 2 erläutert.

Gemäß der Erfindung wird zur Abschirmung gegen die elektrischen, von der Substratoberfläche ausgehenden Störfelder eine Abschirmelektrode verwendet, die wenigstens einen Teil der Flugbahn der Probe umspannt oder umgibt oder entlang dieses Teils der Flugbahn verläuft. Die Abschirmelektrode wirkt wie ein Faraday'scher Käfig. Die Erfinder haben festgestellt, dass die Abschirmelektrode einerseits nicht die Substratoberfläche berühren muss und andererseits nicht bis zum Probendispenser reichen muss, sondern insbesondere den Teil der Flugbahn abschirmen muss, in dem die Störfelder Kraftwirkungen entfalten, die von der Bewegungsrichtung der Proben abweichen.

Die erfindungsgemäß verwendete Abschirmelektrode ist durch ein vom Substrat trennbares Bauteil mit Elektrodenhülsen gebildet sein, durch die mindestens eine Flugbahn der Proben verläuft. Der Vorteil einer separaten Abschirmelektrode besteht darin, dass diese bei geometrischer Anpassung an die Substratformate für herkömmliche Substrate als Zusatzteil verwendet werden kann. Das erfindungsgemäße Verfahren zur Probenablage ist somit mit herkömmlichen Substraten durchführbar, die ggf. für bestimmte Prozessschritte in Bezug auf die Temperaturbeständigkeit oder Formhaltigkeit optimiert sind. Die Verwendung der Elektrodenhülsen als Abschirmelektrode besitzt den zusätzlichen Vorteil, dass diese zeitlich vor den Dispensierschritten auf oder über dem Substrat angeordnet werden kann, so dass die Kompatibilität mit herkömmlichen Dispensiertechniken gegeben ist.

Gemäß einer bevorzugten Ausführungsform der Erfindung kann sich die Abschirmelektrode auf einem freien Potential befinden, also elektrisch isoliert von der Umgebung angeordnet sein. Die Erfinder haben festgestellt, dass die Präsenz der Abschirmelektrode auch ohne Verbindung mit einem Bezugspotential bereits ausreicht, um die geringen, von den auf der Substratoberfläche lokalisierten Ladungen verursachten Felder zu kompensieren. In der Abschirmelektrode wird eine sehr geringe Ladungsmenge influenziert, die sich problemlos auf der Abschirmelektrode verteilt, ohne weitere Störfelder zu bilden.

Alternativ kann die Abschirmelektrode mit einem bestimmten elektrischen Bezugspotential verbunden werden, um eine verbesserte Abschirmungswirkung zu erzielen. Vorzugsweise wird als Bezugspotential das Massepotential (Erdpotential) verwendet.

Ein besonderer Vorteil des erfindungsgemäßen Verfahrens ergibt sich bei der Probenablage auf Mikro- oder Nanotiterplatten mit Kammern oder Kompartimenten, die durch Kompartimentwände voneinander separiert sind. Da an den Kompartimentwänden befindliche Ladungen potentiell die stärksten elektrische Kräfte ausüben könnten, deren Richtung von der Bewegungsrichtung der Probe hin zur jeweiligen Ablageposition abweicht, wird die erfindungsgemäße Abschirmelektrode besonders wirkungsvoll, da sie in die Kompartimente eingesetzt wird, so dass die von den seitlichen Wänden der Kompartimente oder Näpfe ausgehenden Störfelder abgeschirmt werden. Die Abschirmelektrode erstreckt sich vorzugsweise über die Höhe von Kompartimentwänden, die über die Substratoberfläche ragen.

Die genannten Vorteile zeigen sich besonders bei der Bildung von Probenarrays, also bei der Ablage von einer Vielzahl von Proben an eng benachbarten Ablagepositionen in den Kompartimenten, da die zu den verschiedenen Ablagepositionen des Probenarrays führenden Probenwege oder Flugbahnen gemeinsam mit einer Abschirmelektrode abgeschirmt werden können. Vorteilhafterweise wirkt sich die Abschirmung für alle Dispensierschritte in gleicher Weise aus, so dass Probenarrays mit hoher Dichte und Reproduzierbarkeit gebildet werden können.

Die Proben oder Probenarrays werden auf den Böden der Kompartimente (Kammern) der Mikro- oder Nanotiterplatten abgelegt, so dass sich weitere Vorteile in Bezug au die stabile Positionierung der Abschirmelektrode an den Kompartimentwänden und andererseits für die weitere Verarbeitung der Proben oder Probenarrays in den Kompartimenten ergeben. Erfindungsgemäß wird eine an sich bekannte Mikro- oder Nanotiterplatte mit einer matrixartigen Anordnung von Näpfen verwendet, auf deren Böden die Proben oder Probenarrays abgelegt werden. Damit ist eine Kompatibilität mit folgenden Prozessschritten unter Verwendung der Mikro- oder Nanotiterplatte gegeben.

Erfindungsgemäß wird elektrischen Abschirmung eine Abschirmelektrode mit mehreren Elektrodenhülsen verwendet wird, die entsprechend der geometrischen Verteilung Kompartimente oder Näpfe der Reaktionsplatte angeordnet sind, so dass sich Vorteile für eine besonders einfache Handhabung der Abschirmelektrode ergeben können.

Es wird auch ein Substrats mit einem Substratkörper beschrieben, auf dessen Oberfläche mindestens eine Ablageposition für die Aufnahme mindestens einer Probe vorgesehen ist, wobei das Substrat mit einer Abschirmelektrode zur elektrostatischen Abschirmung von Störfelder oberhalb der Ablageposition ausgestattet ist. Vorteilhafterweise werden mit der Abschirmelektrode störende elektrische Felder beseitigt, so dass Fehlpositionierungen bei der Probenablage mit berührungslos arbeitenden Probendispensern vermieden werden.

Gemäß der Erfindung enthält die Abschirmelektrode eine Vielzahl von Elektrodenhülsen. Die Elektrodenhülsen sind allgemein sich in einer Längsrichtung erstreckende, hohle Bauteile mit einer bspw. runden oder eckigen Querschnittsfläche. Die Elektrodenhülsen werden auf dem Substrat oberhalb der Ablageposition so angeordnet, dass die Längsrichtung im Wesentlichen parallel zur Bewegungsrichtung der Probe bei der Probenablage verläuft. Die Elektrodenhülsen können bspw. in Form eines Zylinders, eines Kegelstumpfs oder eines Schachtes gebildet sein und ein kompaktes, flächig geschlossenes oder netz- oder stabförmig unterbrochenes Wandmaterial besitzen.

Es wird beschrieben, dass an einem Ende der Elektrodenhülse ein umlaufender Haltekragen vorgesehen ist, mit dem die Elektrodenhülse am Substrat oder einer Halteeinrichtung, wie z. B. einer Justiereinrichtung angebracht werden kann.

Gemäß der Erfindung umfasst die Abschirmelektrode eine Vielzahl von Elektrodenhülsen, die parallel nebeneinander in einer Reihe oder einer Ebene angeordnet sind. Es sind die Haltekragen zu einer durchgehenden Basisplatte verbunden, von der die Elektrodenhülsen abstehen und die entsprechend den Positionen der Elektrodenhülsen jeweils Durchgangsbohrungen aufweist.

Besondere Vorteile für die Anwendung der Erfindung bei entwickelten Prozesstechniken der Biochemie ergeben sich, wenn das Substrat in an sich bekannter Weise durch eine Mikro- oder Nanotiterplattemit einer Vielzahl von Näpfen gebildet wird und die Elektrodenhülsen mit einer Anordnung entsprechend der Kompartimentanordnung der Reaktionsplatte, also bspw. matrixförmig in geraden Reihen und Spalten entsprechend der Anordnung von Näpfen von Mikro- oder Nanotiterplatten miteinander verbunden sind.

Wenn gemäß einer weiteren Ausführungsform der Erfindung eine Justiereinrichtung zur Einstellung der Position der Abschirmelektrode relativ zum Substrat vorgesehen ist, können sich Vorteile für die Handhabung des Substrats bei weiteren Prozessschritten ergeben. So kann bspw. die Abschirmelektrode so am oder über dem Substrat positioniert werden, dass eine gegenseitige Berührung vermieden wird. Damit wird eine Substratkontamination durch die Abschirmelektrode vermieden. Gemäß bevorzugten Varianten der Erfindung besitzt die Justiereinrichtung insbesondere eine Höheneinstellung und/oder eine Lateraleinstellung, mit denen entsprechend die Höhe der Abschirmelektrode über der Ebene des Substrats oder die Seitenausrichtung der Abschirmelektrode insbesondere relativ zu den Kanten des Substrats oder den Kompartimentwänden einstellbar ist.

Wenn gemäß einer weiteren Gestaltung der Erfindung die Basisplatte einer Vielzahl von Elektrodenhülsen mit einem Elektrodenanschluss zur Verbindung mit einem Referenzpotential, wie z. B. dem Massepotential ausgestattet ist, können sich Vorteile für die Handhabung der Abschirmelektrode und insbesondere deren Einbindung in einen Versuchsaufbau oder ein Dispensiergerät ergeben.

Erfindungsgemäß wird die Abschirmelektrode vorzugsweise aus Metall oder einem leitfähigen Kunststoff gebildet. Die Verwendung von Metall kann für die Reinigung und Wiederverwendbarkeit der Abschirmelektrode von Vorteil sein. Die Verwendung von Kunststoff vereinfacht die Herstellung von Einwegprodukten. Die Abschirmelektrode kann mit dem Substrat fest verbunden sein.

Gemäß einem weiteren Gesichtspunkt der Erfindung wird die o. g. Aufgabe vorrichtungsbezogen durch die Bereitstellung einer Abschirmelektrode für Kompartimente einer Mikro- oder Nanotiterplattegelöst, wobei die Abschirmelektrode Elektrodenhülsen an einer Basisplatte aufweist, wobei die Basisplatte zur Auflage auf der Mikro- oder Nanotiterplattederart eingerichtet ist, dass jeweils eine Elektrodenhülse jeweils in ein Kompartiment der Mikro- oder Nanotiterplatte ragt.

Gemäß der Erfindung umfasst die Abschirmelektrode einen plattenförmigen Verbund einer Vielzahl von Elektrodenhülsen, die matrixartig in geraden Reihen und Spalten auf einer Basisplatte angeordnet sind, die entsprechend den Positionen der Elektrodenhülsen Durchgangslöcher aufweist. Vorteilhafterweise wird die erfindungsgemäße Abschirmelektrode mit einer Form hergestellt, die mit den gängigen Reaktionsplattenformaten, wie mit den Formaten der Mikro- oder Nanotiterplatten kompatibel ist. Für eine verbesserte Handhabung der Abschirmelektrode kann diese mit einer Eingriffseinrichtung zum Eingriff eines Greifwerkzeugs eines Roboters und/oder mit einer Justiereinrichtung zur Höhen- und/oder Seiteneinstellung relativ zur Reaktionsplatte ausgestattet sein.

Vorteilhafte Anwendungen der Erfindung sind in der medizinischen oder biochemischen Diagnostik gegeben, wie zum Beispiel in der Lebensmittelüberwachung oder in der Labordiagnostik.

Weitere Vorteile und Einzelheiten der Erfindung werden aus der Beschreibung der beigefügten Zeichnungen ersichtlich. Es zeigen:
- Figuren 1 und 2:: schematische Illustrationen der Wirkung der für die Realisierung der Erfindung verwendeten elektrostatischen Abschirmung (am Beispiel von Vorrichtungen die nicht Gegenstand der Erfindung sind),
- Figuren 3 bis 6:: Abschirmelektroden, die jeweils eine ein- zelne Elektrodenhülse aufweisen (keine Ausführungsformen der Erfindung),
- Figuren 7 bis 9:: Ausführungsformen erfindungsgemäßer Ab- schirmelektroden, die jeweils eine Viel- zahl von Elektrodenhülsen aufweisen, und
- Figur 10:: eine Abschirmelektrode, die eine schacht- förmige Elektrodenhülse aufweist (keine Ausführungsform der Erfindung), und
- Figuren 11 bis 13:: weitere Abschirmelektroden (keine Ausfüh- rungsformen der Erfindung).

In den Figuren 1 und 2 ist das Prinzip der elektrostatischen Abschirmung von Störfelder bei der Probenablage schematisch illustriert. Bei der herkömmlichen Probenablagetechnik (Figur 2) wird mit einem berührungslos arbeitenden, z. B. piezoelektrisch betätigten Probendispenser 20 eine tropfen- oder partikelförmige Probe 10 zu einem Substrat 30 geschossen. Das Substrat 30 umfasst einen Substratkörper 31, auf dessen Oberfläche durch Kompartimentwände 33 mindestens ein Kompartiment 34 gebildet wird, auf dessen Boden 35 sich eine Ablageposition 32 zur Probenaufnahme befindet. Durch die Kompartimentbildung wird die Ablageposition 32 von weiteren Substratbereichen in der Umgebung räumlich und stofflich abgegrenzt. Das Substrat 30 besteht bspw. komplett aus Kunststoff (z. B. Polystyrol oder Polypropylen) oder aus einem Verbund aus Glas (Substratkörper 31) und Kunststoff (Kompartimentwände 33).

Durch Reibungselektrizität oder andere Aufladungserscheinungen können sich auf den Kunststoffoberflächen Ladungsträger an lokalen Potentialminima sammeln. Wegen der fehlenden elektrischen Leitfähigkeit der verwendeten Kunststoffe können die Ladungsträger nicht abfließen. Beispielhaft ist in Figur 2 eine Ladung 36 illustriert, von der ein elektrisches Feld mit der beispielhaft gezeigten Potentiallinie 37 ausgeht. Das elektrische Feld 37 bildet ein Störfeld für die Bewegung der Probe 10 zur Ablageposition 32.

Die Probe 10 ist beispielsweise ein Flüssigkeitstropfen aus einer wässrigen Lösung mit einem Durchmesser von z. B. 50 bis 70 µm und einem Volumen von z. B. 100 pl. Er erfährt z. B. durch Aufladungsprozesse bei der piezoelektrischen Tropfenerzeugung und/oder durch Dipolwechselwirkungen eine Aufladung, so dass eine Wechselwirkung mit dem Störfeld 37 auftritt. Es wird bspw. eine anziehende oder eine abstoßende Kraftwirkung auf die Probe 10 gebildet. Die gestrichelt eingezeichnete Flugbahn 11 der Probe 10 wird von der Ablageposition 32 in die Umgebung abgelenkt. Diese Ablenkung ist von der zufälligen Verteilung der Ladungen auf der Oberfläche des Substrates abhängig und damit nicht durch eine Kalibrierung des Dispensers 20 erfassbar.

Zur Vermeidung der unerwünschten Lenkung der Probe 10 erfolgt eine elektrostatische Abschirmung des Störfeldes 37 (Figur 1, keine Ausführungsform der Erfindung). Es wird ein feldfreier Raum geschaffen, durch den die Flugbahn 11 entsprechend einem vorgegebenen Bewegungsablauf z. B. bei Verwendung eines ruhenden Probendispensers 20 geradlinig oder bei Verwendung eines bewegten Probendispensers 20 gekrümmt verläuft. Die Abschirmung des Störfeldes 37 erfolgt mit der Abschirmelektrode 40, die mit Massepotential verbunden ist. Der Probendispenser 20 ist vorzugsweise über der Abschirmelektrode 40 und getrennt von dieser angeordnet. Die Probe 10 folgt exakt der gewünschten Flugbahn 11 hin zur Ablageposition 32.

Die Figuren 3 bis 6 und 10 zeigen verschiedene Varianten einer Abschirmelektrode 40, die jeweils eine Elektrodenhülse 41 und einen Haltekragen 42 umfasst (keine Ausführungsformen der Erfindung).

Gemäß Figur 3 (keine Ausführungsform der Erfindung) ist die Abschirmelektrode 40 zum Einhängen in ein Kompartiment 34 des Substrats 30 eingerichtet. Die Elektrodenhülse 41 besitzt einen Außendurchmesser, der geringer als der Innendurchmessers des Kompartiments 34 ist. Mit dem Haltekragen 42 ruht die Abschirmelektrode 40 auf der Oberseite des Substrats 30. Die Länge der Elektrodenhülse 41 ist geringer als die Tiefe des Kompartiments 34 gewählt, so dass zwischen dem unteren, freien Ende der Elektrodenhülse 41 und dem Boden 33 des Kompartiments 33 ein Abstand Δz verbleibt.

Die Schaffung des Abstandes Δz besitzt den Vorteil, dass der Boden 33 durch die Abschirmelektrode 40 nicht kontaminiert oder mechanisch beschädigt werden kann. Der Abstand Δz kann in Abhängigkeit von den übrigen Dimensionen des Kompartiments 34 und der Abschirmelektrode 40 so gewählt werden, dass die Flugbahn der Probe praktisch unbeeinflusst bleibt. Die Elektrodenhülse 41 kann mit einer Pinzette oder einem magnetischen Greifer in das Kompartiment 34 eingesetzt werden.

Das in Figur 3 (mit einer einzelnen Elektrodenhülse keine Ausführungsform der Erfindung) schematisch illustrierte Substrat 30 kann bspw. ein Teil einer Mikro- oder Nanotiterplatte sein. Im Falle einer Mikrotiterplatte besitzt das Kompartiment 34 bspw. eine Tiefe von 10 mm bis 12 mm und einen Durchmesser von 6 mm bis 7 mm. Die Elektrodenhülse 41, die aus Edelstahl besteht, besitzt entsprechend eine axiale Länge von z. B. 13 mm und einen Durchmesser, der kleiner als der Innendurchmesser des Kompartiments gewählt ist, so dass eine berührungslose Einführung der Hülse in das Kompartiment möglich ist. Mit den genannten Dimensionen ist es vorteilhafterweise möglich, auf dem Boden 3 des Kompartiments 34 ein Probenarray 12 mit einer Matrixanordnung von 12 8 Proben anzuordnen. Bei der Verwendung von Nanotiterplatten werden entsprechend geringere Dimensionen verwendet. Allgemein kann ein Probenarray in Abhängigkeit von der konkreten Anwendung mindestens 2, vorzugsweise 6 bis 100 oder mehr Proben umfassen.

Figur 4 (mit einer einzelnen Elektrodenhülse keine Ausführungsform der Erfindung) zeigt eine weitere Variante einer Abschirmelektrode 40 mit einer Elektrodenhülse 41 und einem Haltekragen 42. Diese Abschirmelektrode 40 kann analog zu Figur 3 in ein Kompartiment eines Substrats eingehängt oder alternativ auf ein Substrat mit einer flächigen, ebenen Oberfläche aufgesetzt werden. In diesem Fall dient der Haltekragen 42 als Stützfläche, die die gewünschte Ablageposition auf dem Substrat (nicht dargestellt) umgibt.

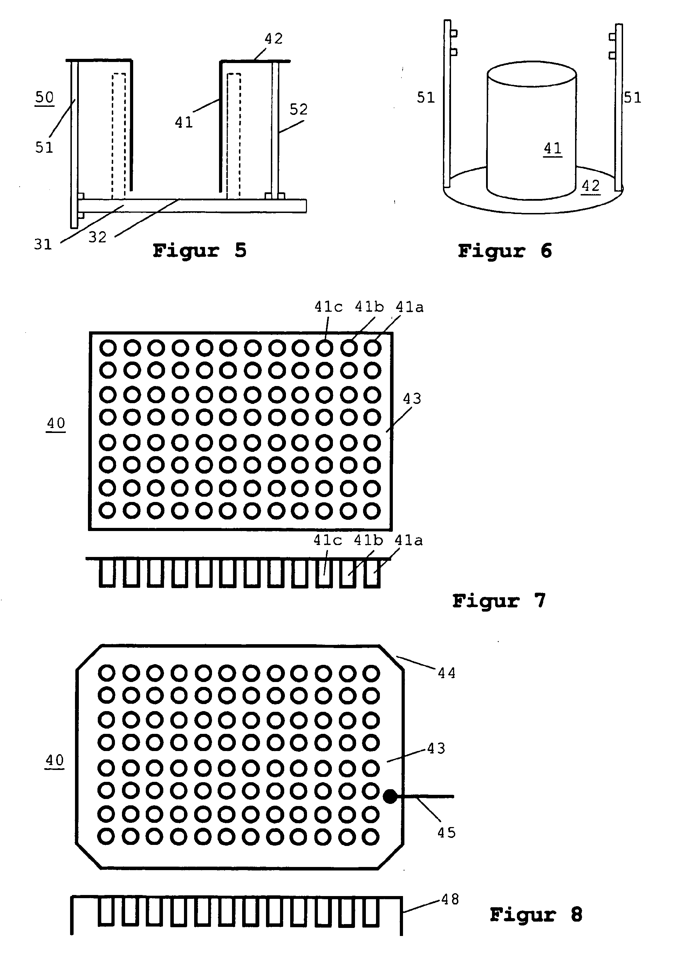

Figur 5 (mit einer einzelnen Elektrodenhülse keine Ausführungsform der Erfindung) illustriert einen Aufbau analog zu Figur 3, bei dem Merkmale einer Justiereinrichtung 50 dargestellt sind. Mit der Justiereinrichtung 50 erfolgt eine Halterung der Abschirmelektrode 40 mit einer bestimmten Position relativ zur Ablageposition 32. Hierzu ist je nach den Eigenschaften des verwendeten Substrats eine Höheneinstellung 51 und/oder eine Lateraleinstellung 52 vorgesehen. Die Höheneinstellung 51 besteht bspw. aus einem oder mehreren Haltestäben, deren oberes, freies Ende eine Auflage für den Haltekragen 42 der Abschirmelektrode 41 bildet und deren unteres Ende bspw. am Rand des Substratkörpers 31 verschiebbar befestigt ist. Für die Lateraleinstellung 52 sind analog ein oder mehrere Stäbe vorgesehen, deren oberes, freies Ende wiederum eine Auflage für den Haltekragen 42 bilden und die an geeigneten Positioniereinrichtungen, z. B. Schienen auf der Substratoberfläche verschiebbar oder verstellbar angeordnet sind. Bei der Verwendung der Justiereinrichtung 50 kann die Abschirmelektrode 40 vorteilhafterweise ohne direkten Kontakt zwischen der Abschirmelektrode 40 und dem Substratkörper angeordnet werden. Die Positionierung der Abschirmelektrode 40 kann insbesondere auch ohne Kompartimentwände (gestrichelt eingezeichnet) erfolgen.

Figur 6 (keine Ausführungsform der Erfindung) zeigt eine Variante der Abschirmelektrode 40 mit der Justiereinrichtung, bei der ein seitliches Anstecken bspw. an ein streifenförmiges Substrat vorgesehen ist. Abweichend vom illustrierten Beispiel können mehrere Höheneinstellungen 51 oder zusätzlich Lateraleinstellungen vorgesehen sein.

Die Figuren 7, 8 und 9 illustrieren Ausführungsformen der Erfindung, bei denen die Abschirmelektrode 40 eine Abschirmmaske bildet, die eine Vielzahl von Elektrodenhülsen 41a, 41b, 41c ... aufweist, die an einer gemeinsamen Basisplatte 43 angeordnet sind. Jede Elektrodenhülse 41a, 41b, 41c ... wird durch einen rohr- oder hohlzylinderförmigen Vorsprung auf der Basisplatte 43 gebildet, die entsprechend den Positionen der Elektrodenhülsen Durchgangsbohrungen aufweist. Die geometrische Anordnung der Elektrodenhülsen 41a, 41b, 41c, ... entspricht der geometrischen Anordnung der Näpfe einer Mikrotiterplatte. In den Figuren sind beispielhaft 96 Abschirmelektroden 40 gezeigt, die für das 8 12 - Format einer 96-Napf-Mikrotiterplatte vorgesehen sind.

Die schematische Draufsichten in den Figuren 7 und 8 (oben) illustrieren die Matrix-Anordnung der Elektrodenhülsen in geraden Reihen und Spalten. Figur 8 illustriert zusätzlich schematisch Eingriffseinrichtungen 44, die am Rand der Basisplatte 43 vorgesehen sind. Die Eingriffseinrichtungen 44 dienen dem Eingriff eines Handhabungswerkzeugs, wie z. B. eines Greifswerkzeugs eines Roboters. Des Weiteren zeigt Figur 8 bei Bezugszeichen 45 einen Elektrodenanschluss zur Verbindung der Abschirmelektrode 40 mit einem Bezugspotential. Im unteren Teil der Figuren 7 und 8 ist jeweils schematisch eine Seitenansicht der Basisplatte 43 mit den abstehenden Elektrodenhülsen 41a, 41b, 41c, ... gezeigt.

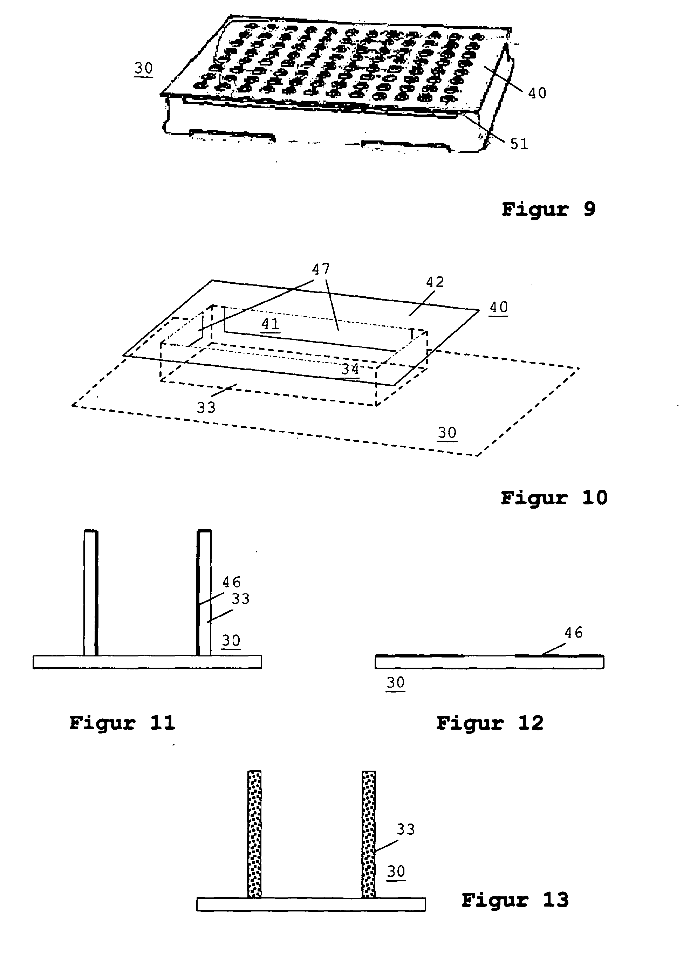

Figur 9 illustriert eine Ausführungsform eines erfindungsgemäßen Substrats 30, das mit einer Abschirmelektrode 40 ausgestattet ist. Das Substrat 30 enthält eine an sich bekannte 96-Napf-Mikrotiterplatte aus Kunststoff. Auf der Oberseite der Mikrotiterplatte 30 sind die Probenkompartimente (Näpfe) vorgesehen, die in der Darstellung von Figur 9 durch die Abschirmelektrode 40 verdeckt sind. An den Ecken der Mikrotiterplatte 30 befinden sich Vorsprünge, die als Höheneinstellung 51 dienen.

Im Betriebszustand wird die Abschirmelektrode 40 mit den in die Näpfe der Mikrotiterplatte weisenden Elektrodenhülsen auf die Oberseite der Mikrotiterplatte und insbesondere auf die Vorsprünge 51 aufgelegt. Je nach den konkreten Betriebsbedingungen (insbesondere Stärke der erwarteten Störfelder, Volumen der abgelegten Proben) kann die Abschirmelektrode 40 über einen Elektrodenanschluss mit Massepotential verbunden sein.

Die in den Figuren 7 bis 9 illustrierte Abschirmelektrode 40 ist bspw. aus Edelstahl hergestellt. Die Elektrodenhülsen sind durch Hartlöten auf der Basisplatte befestigt. Die Höhe der Elektrodenhülsen beträgt bspw. 13 mm. Die Dicke der Basisplatte beträgt bspw. 1 mm. Die Abschirmelektrode 40 kann je nach der verwendeten Reaktionsplatte mit einem veränderten Format der Elektrodenhülsen Geometrie und -anordnung gebildet sein. Es können insbesondere einzelne Elektrodenhülsenreihen und/oder Elektrodenhülsen mit einem rechteckigen Querschnitt vorgesehen sein. Die Basisplatte kann in Elektrodenteile zerlegbar sein.

Gemäß einer abgewandelten Gestaltung kann die Basisplatte 43 der Abschirmelektrode 40 wie ein Deckel einer herkömmlichen Mikrotiterplatte gebildet sein. In diesem Fall ist am äußeren Rand der Basisplatte 43 ein umlaufender, abgewinkelter Streifen 48 (siehe Figur 8, unten) vorzugsweise mit einer Breite vorgesehen, der geringfügig größer oder gleich der Dicke der Mikrotiterplatte gewählt ist. Der Streifen 48 bildet in diesem Fall die Höheneinstellung zur Positionierung der Abschirmelektrode 40 über der Mikrotiterplatte. Die Abschirmelektrode 40 kann selbst als Deckel der Mikrotiterplatte verwendet werden, wobei vor der Erstbenutzung auf der Oberseite der Basisplatte ggf. eine Abdeckfolie vorgesehen ist.

Figur 10 (keine Ausführungsform der Erfindung) zeigt eine weitere Abschirmelektrode 40 mit einer einzelnen Elektrodenhülse 41, die an die geometrische Form eines Substrats 30 (gestrichelt gezeichnet) mit mindestens einem kastenförmigen Kompartiment 34 angepasst ist. Die Abschirmelektrode 40 wird durch eine passend zugeschnittene und gebogene Metallplatte oder -folie gebildet, die einen rechteckigen, ebenen Haltekragen 42 mit einer inneren Öffnung aufweist, von der in das Kompartiment 34 ragend Abschirmflügel 47 abgebogen sind. Aus Übersichtlichkeitsgründen sind nur zwei Abschirmflügel 47 gezeigt. Die Abschirmflügel 47 bilden die schachtförmige Elektrodenhülse 41 zur Abschirmung des Innenraumes des Kompartiments gegen Störfelder insbesondere von den Kompartimentwänden 33.

In den Figuren 11 und 12 sind Varianten gezeigt, bei denen die Abschirmelektrode durch eine Abschirmbeschichtung 46 auf dem Substrat 30 gebildet wird (keine Ausführungsformen der Erfindung). Bei einem Substrat mit einer Kompartimentstruktur (Figur 10) ist die Abschirmbeschichtung 46 auf der Oberseite und den Innenseiten der Kompartimentwände 34 vorgesehen. Bei einem komplett ebenen, unstrukturierten Substrat (Figur 11) befindet sich die Abschirmbeschichtung 46 in der Umgebung der gewünschten Ablageposition 32. Die Abschirmbeschichtung 46 besteht bspw. aus einem inerten Metall (z. B. Gold) oder einem leitfähigen Kunststoff (z. B. Polythiofene, Polyaniline, Polypyrole, Polyvinylidenfluoride o. dgl.). Die Dicke der Abschirmbeschichtung 46 ist vorzugsweise im Bereich von 10 µm bis 0.5 mm gewählt. Sie wird beispielsweise durch Bedampfung oder Tauchbeschichtung hergestellt.

Figur 12 (keine Ausführungsform der Erfindung) illustriert eine Abschirmelektrode, bei der diese durch einen Teil des Substrats, nämlich durch die Kompartimentwände 33 gebildet wird. Das Substrat 30, das bspw. wie eine Mikro- oder Nanotiterplatte aufgebaut ist und eine Bodenplatte 33 aus Glas aufweist, besitzt eine Kompartimentstruktur aus leitfähigem Kunststoff (siehe oben). In diesem Fall wird die Funktion der Abschirmelektrode durch die Kompartimentwände 33 übernommen. Alternativ zu der in Figur 12 gezeigten Variante kann auch die komplette Reaktionsplatte, insbesondere Mikro- oder Nanotiterplatte aus leitfähigem Kunststoff hergestellt sein.

Die in der Beschreibung, den Zeichnungen und den Ansprüchen offenbarten Merkmale der Erfindung können einzeln oder in Kombination für die Verwirklichung der Erfindung in ihren verschiedenen Ausgestaltungen von Bedeutung sein.

## Patentansprüche

1. Verfahren zur Probenablage, bei dem Proben (10) auf Böden von Näpfen einer Mikro- oder Nanotiterplatte angeordnet werden, mit den Schritten:
- Positionierung eines Probendispensers (20) über der Mikro-oder Nanotiterplatte, und
- Betätigung des Probendispensers (20), so dass jeweils eine der Proben (10) vom Probendispenser (20) entlang einer Flugbahn (11) zu einer vorbestimmten Ablageposition (32) auf der Mikro- oder Nanotiterplatte bewegt wird,
**dadurch gekennzeichnet, dass**
- wenigstens ein Teil der Flugbahn (11) gegen elektrische Störfelder abgeschirmt wird, wobei
- die Abschirmung gegen elektrische Störfelder mit einer Abschirmelektrode (40) erfolgt, die eine Basisplatte (43) und eine Vielzahl von Elektrodenhülsen (41) umfasst, die matrixartig in geraden Reihen und Spalten entsprechend der Anordnung der Näpfe der Mikro- oder Nanotiterplatte an der Basisplatte (43) angeordnet und über diese elektrisch miteinander verbunden sind, wobei
- die Basisplatte (43) auf der Oberseite der Mikro- oder Nanotiterplatte derart aufgelegt wird, dass die Elektrodenhülsen (41) jeweils in einen der Näpfe (34) der Mikro- oder Nanotiterplatte hineinragen.

2. Verfahren nach Anspruch 1, bei dem sich die Abschirmelektrode (40) auf einem freien Potential befindet.

3. Verfahren nach Anspruch 1, bei dem die Abschirmelektrode (40) mit einem vorbestimmten elektrischen Bezugspotential verbunden wird.

4. Verfahren nach Anspruch 3, bei dem die Abschirmelektrode (40) mit dem Massepotential verbunden wird.

5. Verfahren nach einem der vorhergehenden Ansprüche, bei dem die Schritte der Positionierung und Betätigung des Probendispensers (20) aufeinander folgend mehrfach durchgeführt werden, so dass mehrere Proben auf verschiedenen Flugbahnen an verschiedenen Ablagepositionen (32) angeordnet werden und in den Näpfen der Mikro- oder Nanotiterplatte mindestens ein Probenarray (12) bilden, wobei die zu jeweils einem Probenarray (12) führenden Flugbahnen gemeinsam mit der Abschirmelektrode (40) gegen elektrische Störfelder abgeschirmt werden.

6. Verfahren nach einem der vorhergehenden Ansprüche, bei dem mit der Abschirmelektrode (40) eine elektrische Abschirmung gegen elektrische Störfelder erfolgt, die von seitlichen Wänden (33) der Näpfe ausgehen.

7. Abschirmelektrode (40) für Näpfe einer Mikro- oder Nanotiterplatte, umfassend:
- eine Basisplatte (43), und
- eine Vielzahl von Elektrodenhülsen (41), die matrixartig in geraden Reihen und Spalten entsprechend der Anordnung der Näpfe der Mikro- oder Nanotiterplatte an der Basisplatte (43) angeordnet und über diese elektrisch miteinander verbunden sind, wobei die Basisplatte (43) zur Auflage auf der Oberseite der Mikro- oder Nanotiterplatte derart eingerichtet ist, dass die Elektrodenhülsen (41) jeweils in einen der Näpfe (34) der Mikro- oder Nanotiterplatte hineinragen.

8. Abschirmelektrode nach Anspruch 7, die einen Elektrodenanschluss (45) zur Verbindung mit einem Referenzpotential aufweist.

9. Abschirmelektrode nach einem der Ansprüche 7 bis 8, die eine Eingriffseinrichtung (44) zum Eingriff eines Werkzeugs aufweist.

10. Abschirmelektrode nach einem der Ansprüche 7 bis 9, die mit einer Justiereinrichtung (50) zur Höhen- und/oder Lateraleinstellung relativ zur Reaktionsplatte ausgestattet ist.

11. Substrat (30) zur Aufnahme von Proben (10), das
- eine Mikro- oder Nanotiterplatte mit einem Substratkörper (31) und Näpfen umfasst, auf deren Böden eine Vielzahl von Ablagepositionen (32) vorgesehen sind, und
- mit einer Abschirmelektrode (40) gemäß einem der Ansprüche 7 bis 10 ausgestattet ist, die zur elektrostatischen Abschirmung des Raumes oberhalb der Ablagepositionen (32) gegen elektrische Störfelder eingerichtet ist.

12. Substrat nach Anspruch 11, bei dem
- eine Justiereinrichtung (50) vorgesehen ist, mit der die Position der mindestens eine Elektrodenhülse (41) relativ zum Substrat (30) einstellbar ist.

13. Substrat nach Anspruch 12, bei dem die Justiereinrichtung (50) eine Höhen- und/oder eine Lateraleinstellung (51, 52) umfasst.

14. Substrat nach mindestens einem der Ansprüche 11 bis 13, bei dem die Abschirmelektrode (40) aus Metall oder elektrisch leitfähigem Kunststoff gebildet ist.

## Claims

1. Method for depositing samples, in which samples (10) are arranged on bottoms of wells of a microtitre plate or nanotitre plate, comprising the steps of:
- positioning a sample dispenser (20) above the microtitre plate or the nanotitre plate, and
- actuating the sample dispenser (20) so that in each case one of the samples (10) is moved from the sample dispenser (20) along a trajectory (11) to a predefined deposition position (32) on the microtitre plate or the nanotitre plate,
**characterized in that**
- at least part of the trajectory (11) is shielded against electrical interference fields, wherein
- the shielding against electrical interference fields is effected by means of a shielding electrode (40), which comprises a base plate (43) and a plurality of electrode sleeves (41) being arranged in the form of a matrix in straight rows and columns in a manner according to the arrangement of the wells of the microtitre plate or nanotitre plate at the base plate (43) and being electrically connected with each other via the base plate (43), wherein
- the base plate (43) is applied to an upper side of the microtitre plate or the nanotitre plate such that each of the electrode sleeves (41) protrudes in one of the wells (34) of the microtitre plate or the nanotitre plate, respectively.

2. Method according to claim 1, in which the shielding electrode (40) is at a free potential.

3. Method according to claim 1, in which the shielding electrode (40) is connected to a predefined electric reference potential.

4. Method according to claim 3, in which the shielding electrode (40) is connected to ground potential.

5. Method according to one of the preceding claims, in which the steps of positioning and actuating the sample dispenser (20) are carried out a number of times in succession, so that a number of samples are arranged at different deposition positions (32) on different trajectories and form at least one sample array (12) in the wells of the microtitre plate or the nanotitre plate, wherein the trajectories leading to a respective sample array (12) are jointly shielded against electrical interference fields by the shielding electrode (40).

6. Method according to one of the preceding claims, in which the shielding electrode (40) provides electrical shielding against electrical interference fields emanating from side walls (33) of the wells.

7. Shielding electrode (40) for wells of a microtitre plate or a nanotitre plate, comprising:
- a base plate (43), and
- a plurality of electrode sleeves (41), which are arranged in the form of a matrix in straight rows and columns in a manner corresponding to the arrangement of the wells of the microtitre plate or the nanotitre plate at the base plate (43) and which are electrically connected with each other via the base plate (43), wherein the base plate (43) is designed to bear against the upper side of the microtitre plate or the nanotitre plate in such a way that each of the electrode sleeves (41) protrudes into one of the wells (34) of the microtitre plate or the nanotitre plate, respectively.

8. Shielding electrode according to claim 7, which comprises an electrode terminal (45) for connection to a reference potential.

9. Shielding electrode according to one of the claims 7 to 8, which comprises an engagement device (44) for engagement of a tool.

10. Shielding electrode according to one of the claims 7 to 9, which is equipped with an adjustment device (50) for height adjustment and/or lateral adjustment relative to the reaction plate.

11. Substrate (30) for receiving samples (10), which
- comprises a microtitre plate or a nanotitre plate with a substrate body (31) and wells, on the bottoms of which a plurality of deposition positions (32) is provided, and
- is provided with a shielding electrode (40) according to one of the claims 7 to 10, which is arranged for electrostatic shielding of the space above the deposition positions (32) against electrical interfering fields.

12. Substrate according to claim 11, wherein
- an adjustment device (50) is provided, by means of which the position of the at least one electrode sleeve (41) relative to the substrate (30) can be adjusted.

13. Substrate according to claim 12, wherein the adjustment device (50) comprises a height adjustment and/or a lateral adjustment (51, 52).

14. Substrate according to one of the claims 11 to 13, wherein the shielding electrode (40) is formed of metal or electrically conductive plastic.

## Revendications

1. Procédé de dépose d'échantillons, dans lequel des échantillons (10) sont disposés sur des fonds de cuvettes d'une plaque de microtitration ou de nanotitration, comprenant les étapes consistant à :
- positionner un échantillonneur (20) au-dessus de la plaque de microtitration ou de nanotitration, et
- actionner l'échantillonneur (20), de sorte que respectivement l'un des échantillons (10) est déplacé par l'échantillonneur (20) suivant une trajectoire (11) jusqu'à une position de dépose prédéterminée (32) sur la plaque de microtitration ou de nanotitration,
**caractérisé en ce que**
- au moins une partie de la trajectoire (11) est protégée contre des champs électriques parasites, dans lequel
- la protection contre les champs électriques parasites est effectuée à l'aide d'une électrode de protection (40) qui comprend une plaque de base (43) et une pluralité de douilles d'électrode (41) qui sont disposées à la manière d'une matrice en rangées et colonnes droites selon l'agencement des cuvettes de la plaque de microtitration ou de nanotitration sur la plaque de base (43) et sont reliées ensemble de façon électrique par l'intermédiaire de celle-ci, dans lequel
- la plaque de base (43) est posée sur la face supérieure de la plaque de microtitration ou de nanotitration de telle sorte que les douilles d'électrode (41) dépassent respectivement dans l'une des cuvettes (34) de la plaque de microtitration ou de nanotitration.

2. Procédé selon la revendication 1, dans lequel l'électrode de protection (40) se trouve à un potentiel libre.

3. Procédé selon la revendication 1, dans lequel l'électrode de protection (40) est reliée à un potentiel de référence électrique prédéterminé.

4. Procédé selon la revendication 3, dans lequel l'électrode de protection (40) est reliée au potentiel de masse.

5. Procédé selon l'une quelconque des revendications précédentes, dans lequel les étapes du positionnement et de l'actionnement de l'échantillonneur (20) sont exécutées successivement à plusieurs reprises, de sorte que plusieurs échantillons sur différentes trajectoires sont disposés à des positions de dépose différentes (32) et forment dans les cuvettes de la plaque de microtitration ou de nanotitration au moins un groupement d'échantillons (12), dans lequel les trajectoires menant respectivement à un groupement d'échantillons (12) sont protégées ensemble par l'électrode de protection (40) contre des champs électriques parasites.

6. Procédé selon l'une quelconque des revendications précédentes, dans lequel l'électrode de protection (40) réalise une protection électrique contre des champs électriques parasites qui émanent des parois latérales (33) des cuvettes.

7. Electrode de protection (40) pour des cuvettes d'une plaque de microtitration ou de nanotitration, comprenant :
- une plaque de base (43), et
- une pluralité de douilles d'électrode (41) qui sont disposées à la manière d'une matrice en rangées et colonnes droites selon l'agencement des cuvettes de la plaque de microtitration ou de nanotitration sur la plaque de base (43) et sont reliées ensemble de façon électrique par l'intermédiaire de celle-ci, dans lequel la plaque de base (43) est aménagée pour être posée sur la face supérieure de la plaque de microtitration ou de nanotitration de telle sorte que les douilles d'électrode (41) dépassent respectivement dans l'une des cuvettes (34) de la plaque de microtitration ou de nanotitration.

8. Electrode de protection selon la revendication 7, présentant une borne d'électrode (45) pour une connexion à un potentiel de référence.

9. Electrode de protection selon l'une quelconque des revendications 7 à 8, présentant un dispositif de mise en prise (44) pour la mise en prise d'un outil.

10. Electrode de protection selon l'une quelconque des revendications 7 à 9, qui est munie d'un dispositif d'ajustage (50) pour le réglage en hauteur et/ou latéral par rapport à la plaque de réaction.

11. Substrat (30) pour recevoir des échantillons (10), ledit substrat
- comprenant une plaque de microtitration ou de nanotitration avec un corps de substrat (31) et des cuvettes sur les fonds desquelles est prévue une pluralité de positions de dépose (32), et
- étant muni d'une électrode de protection (40) selon l'une quelconque des revendications 7 à 10 qui est aménagée pour la protection électrostatique de l'espace au-dessus des positions de dépose (32) contre des champs électriques parasites.

12. Substrat selon la revendication 11, dans lequel
- un dispositif d'ajustage (50) est prévu qui permet de régler la position de ladite au moins une douille d'électrode (41) par rapport au substrat (30).

13. Substrat selon la revendication 12, dans lequel le dispositif d'ajustage (50) comprend un réglage en hauteur et/ou latéral (51, 52).

14. Substrat selon au moins l'une quelconque des revendications 11 à 13, dans lequel l'électrode de protection (40) est formée à partir de métal ou d'une matière plastique électriquement conductrice.
